# EUROPEAN PATENT APPLICATION

(11) **EP 2 826 527 A1**
(43) Date of publication of application: **21.01.2015**
(21) Application number: 12871417.7
(22) Date of filing: 03.07.2012
(51) Int. Cl.: A63B 69/36

(54) **SYSTEM FOR INDICATING THE POSITION OF A GOLF BALL HAVING FALLEN ON A SCREEN ON A REAL GREEN AND A METHOD OF PLAYING GOLF USING THE SAME**

(30) Priority: 15.03.2012 KR 20120026497
(71) Applicant: Zenicu Co. Ltd., Seoul 100-798 (KR)
(72) Inventor: SHON, Moon Sun, Seoul 137-040 (KR)
(74) Representative: Chaillot, Geneviève
(86) International application number: PCT/KR2012/005285
(87) International publication number: WO 2013/137521

(57) **Abstract**

The present invention relates to a system for indicating the position of a golf ball having fallen on a screen on a real green and a method of playing golf using the same, and more particularly, in an indoor golf game zone where screen golf is played from the tee shot to the periphery of the green, and if a golf ball reaches the periphery of the green, the short game is played on a real green, to a system for correctly indicating the position of a golf ball having fallen on the screen on a real green in order to shift the game from the screen golf to the short game on the real green and to a method of playing golf using the same.

## Description

### Technical Field

The present invention relates, in general, to a system for indicating the impact point of a golf ball having fallen on a screen on a real green and a method of playing golf using the same, and, more particularly, to a system for indicating the correct position of a golf ball having fallen on a screen on a real green in order to shift a game from a screen golf to a short game on a real green, wherein, in an indoor golf café, screen golf is played from a tee shot zone to the periphery of a green, and, once a golf ball reaches the periphery of the green, a short game is played on a real green, and to a method of playing golf using the same.

### Background Art

Generally, a golf course contains 18 holes, each of which is designed to have a par ranging from 3 to 5 strokes, and a typical 18-hole golf course requires a total of 72 strokes. The provision of a full 18-hole golf course requires a vast grassed land of more than 700,000 square meters.

However, the construction of a golf course of the kind mentioned above costs an enormous amount of money, and the cost of building and maintaining the golf course lays a burden on its users, which translates into high rates for the golf course. Therefore, there are several problems with the use of the golf course: that it is not feasible to construct a golf course near a residential area; and that outdoor golf courses like the one mentioned above are under so much influence of weather that they cannot be a viable option in case of heavy rain or snow, or temperature extremes.

Therefore, in order to ease inconvenience and solve some of those problems and to offer an enjoyable indoor golf game similar to a game played on a real golf course, the applicant has developed and proposed an indoor golf café bringing the gaming experience to life, where, for long distance shots like a tee shot, a screen game is played to determine the direction and distance of a golf ball through its trajectory and, for chip shots and putts, a short game is played on a green and its periphery covered with real grass, like a real full 18-hole golf course. (Korean Patent Application No. 10-2010-0071078)

An indoor golf café according to the prior art above, equipped with a prescribed number of holes, such as 9, 18 or 27 holes, comprises: a screen golf area, wherein screen golf is played for each hole until a golf ball reaches the periphery of a green; and a short game area, wherein the periphery of a green is covered with real grass and formed, adjacent to the screen golf area, in the same shape as the periphery of the green on the screen golf area on the screen.

However, the prior art above was not sufficient in terms of a concrete process design and a technical solution for displaying the position of a golf ball having fallen on the periphery of a green on the screen golf area on the real green or the periphery thereof, which caused problems in that, due to the inaccurate conversion from the position of a golf ball on a screen to the position on a real grass green, a short game is played based on a rough position of the ball and that the inaccurate position leads to distrust among players.

Also, in multiple golf games simultaneously played by multiple players in several sections of several screen golf areas and several short game areas covered with real grass in the advanced screen golf café above, facilities of adjacent holes, players and game leaders had difficulties in real-time, organic communication and information sharing for smooth progress of the indoor golf games, which requires that the impact point of a virtual golf ball on a screen should be converted into the impact point of a real ball on a real grass green, with time efficiency and precision, and without stoppage or obstacles.

### Disclosure

### Technical Problem

Accordingly, the present invention has been made keeping in mind the above problems occurring in the prior art, and an object of the present invention is to provide a system for indicating the impact point of a golf ball on a screen on a real green in order to allow smooth progress of indoor golf games, wherein, in multiple golf games simultaneously played by multiple players in an advanced screen golf café having several screen golf areas and several short game areas covered with real grass, the impact point on the periphery of the green for each hole on the screen is quickly and accurately converted into the impact point on the real green.

### Technical Solution

In accordance with an embodiment of the present invention, a system for indicating the impact point of a golf ball on a screen on a real green, wherein an indoor golf café has a screen golf area for tracing a golf ball on a screen from a tee shot zone to the periphery of a green for the progress of a game and a short game area for allowing players to play a short game on a real green once the ball reaches the periphery of the green, comprises: a DB server for receiving, as an input, and storing information about a golf course displayed on the screen for the screen golf area and same information as the real green, converting the impact point of the ball having fallen on the periphery of the green during the game into coordinate data and storing the data; an RPGA server for retrieving and storing the coordinates of the ball stored in the DB server and calculating and storing the movement information of a laser pointer, such as travel distance, direction and rotational angle, based on the stored coordinates of the ball; a laser control PC for retrieving and storing the movement information of the laser pointer stored in the RPGA server and operating the laser pointer; and a laser pointer for irradiating a laser beam to indicate the impact point of the ball having fallen on the periphery of the green according to a command of the laser control PC.

The system may further contain a wireless terminal for commanding the transmission of the coordinates of the ball stored in the DB server to the RPGA server and commanding the laser control PC to operate the laser pointer, and the coordinates of the ball may be the distances on the x-axis, y-axis and a diagonal between the x-axis and y-axis from the center of the green as a starting point.

The laser pointer is installed above the real green and its operation may be controlled by a motor connected with the laser pointer. The laser beam irradiated on the impact point of the ball from the laser pointer may contain a point image and a player's ID.

In accordance with an embodiment of the present invention, a method of playing a golf game using the system for indicating the impact point of a golf ball on a screen on a real green, the method used in an indoor golf café having a screen golf area for tracing a golf ball on a screen from a tee shot zone to the periphery of a green for the progress of the game and a short game area for allowing players to play a short game on a real green once the ball reaches the periphery of the green, comprises the steps of: playing a game by hitting golf balls on the screen golf area until the ball reaches the periphery of the green; ending the previous screen golf step when the golf ball falls on the periphery of the green on the screen, converting the impact point of the ball on the screen into the coordinates of the impact point on the real green and storing the coordinates in the DB server; calculating movement data for the laser pointer disposed above the real green, based on the converted coordinates stored in the DB server, and storing the data in the RPGA server; irradiating a laser beam on the impact point of the ball on the real green, based on the movement data for the laser pointer stored in the RPGA server; and playing a short game after placing a golf ball on the spot marked on the real green.

Also, the steps of storing the coordinates in the DB server, storing the movement data in the RPGA server and indicating the impact point of the ball may be performed by a wireless terminal held by a caddy.

### Advantageous Effects

According to an embodiment of the present invention, for golf games played in an indoor golf café having a screen golf area and a short game area covered with real grass, and for golf games played simultaneously on 18 holes, smooth transition from a screen game on each hole to a game on a real green on each hole offers the feeling of long-distance hitting on the screen golf area and the feeling of delicate playing on the short game area covered with real grass, thus having an advantageous effect of providing an indoor golf café where a game feels similar to the one played on a real golf course.

Also, for the transition from a screen golf game on each hole to a game on the real green of each hole, a real green is formed as a duplication of the periphery of a green on the screen, and the impact point of a ball having fallen on the periphery of a green on the screen is quickly and accurately indicated on a real green, thus having another advantageous effect of allowing an enjoyable indoor golf game equivalent to a short game on a real golf course.

### Description of Drawings

FIG. 1 is a block diagram of a system according to the invention;
FIG. 2 illustrates conceptual diagrams for explaining the conversion from the coordinates of a ball in a 3D terrain to the position of the ball on a real green, with FIG. 2 (a) showing the 3D terrain and FIG. 2(b) showing the periphery of the real green (1) and the real green (2); and
FIG. 3 is a diagram for explaining the movement of a laser pointer towards a position obtained by conversion.

### Best Mode

From here on, one specific embodiment of the present invention is described in detail with reference to the accompanying drawings.

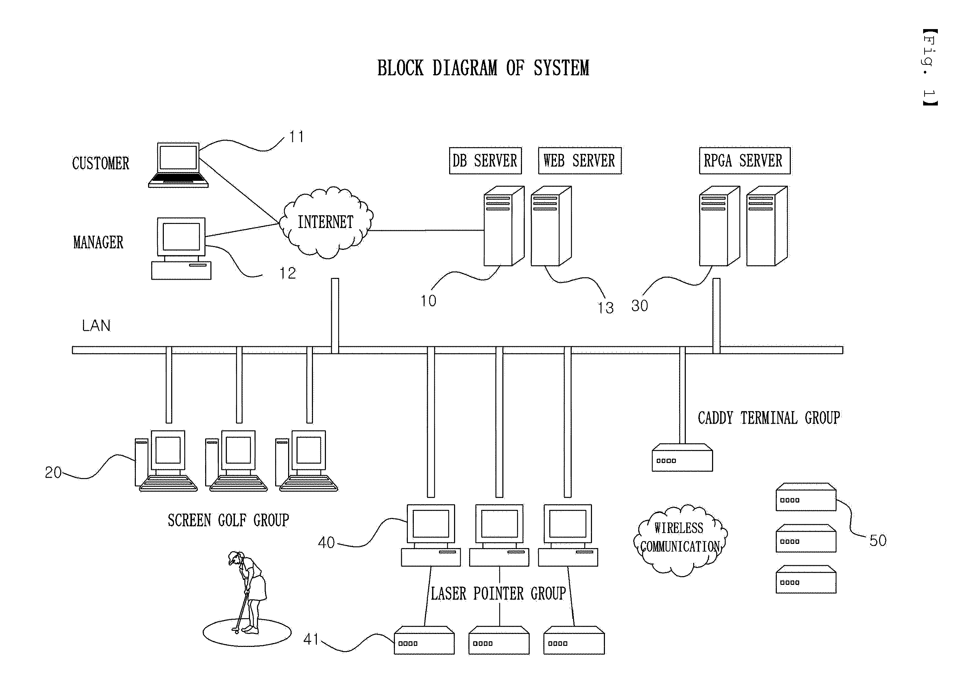

FIG. 1 is a block diagram of a system according to the invention. As in the explanation of the prior art above, the invention is described on the premise that the invention is applied to an indoor golf café having a screen golf area for tracing a golf ball on a screen for the progress of a golf game and a short game area for allowing players to play a short game on a real green once the ball reaches the periphery of the green. However, the invention is not limited thereto, and, of course, can be widely applied to the conversion from the coordinates of a golf ball on a screen in a screen golf game to the position of the ball on a real indoor or outdoor golf course.

In the invention, for a transition from a screen golf game on each hole to a game on the real green of each hole, a real green is formed as a duplication of the periphery of a green on the screen. In other words, the formed real green is used as a 3D representation on the screen.

As in FIG. 1, the invention includes a DB server 10 for receiving, as an input, and storing information about a golf course displayed on the screen for the screen golf area and the same information as the real green and the periphery thereof for the short game area, converting the impact point of a ball having fallen on the periphery of the green during a game into coordinate data and storing the data.

The screen golf area for each hole is equipped with a screen control PC 20 for performing a variety of basic functions of a conventional screen golf game, and in FIG. 1, these functions as a whole is called a screen golf group for convenience.

The DB server 10 is connected via LAN to an RPGA server 30, which retrieves and stores the coordinates of the ball stored in the DB server, and calculates and stores the movement information of a laser pointer, such as travel distance, direction and rotational angle, based on the stored coordinates of the ball. The information stored in the DB server 10 can be searched for by a customer terminal 11 and a manager terminal 12.

The RPGA server 30 is connected to a laser control PC 40, which retrieves and stores the movement information of the laser pointer stored in the RPGA server 30 and operates the laser pointer. The laser control PC 40 is combined with the laser pointer, which irradiates laser to indicate the impact point of a ball having fallen on the periphery of a green according to a command of the laser control PC 40, and the laser pointer is operated by a laser pointer driving device 41.

In the present invention, the laser pointer driving device 41 and the laser pointer are, in principle, installed on the ceiling above the green covered with real grass and the periphery of the green. Of course, the laser control PC 40 can be installed on the periphery of the green.

Since an indoor golf game according to the present invention requires a movement from a screen golf area to a short game area, and at the moment of the movement, players need to carry with them their golf game scores earned until the movement and the position of the ball having fallen on the periphery of a green to the periphery of a green covered with real grass, it may be convenient to use a caddy. Players, without caddies, may use the laser control PC 40 to send the movement information to the periphery of a real green, whereas caddies may hold and operate a wireless terminal 50 designed to command the transmission of the coordinates of the ball stored in the DB server 10 to the RPGA server 30 and operate the laser pointer by sending a command to the laser control PC 40.

In the above, the coordinates of a ball is calculated into the distances on the x-axis, y-axis and the diagonal between the x-axis and y-axis from the center of the green as a starting point. Of course, the starting point may be moved to another point if necessary. The laser pointer is installed above a real green and controlled by a motor connected with the laser pointer. One or more motors may be installed. The laser beam irradiated on the impact point of the ball from the laser pointer may contain a point image and a player's ID. That is, a laser image is displayed on the real green or the periphery thereof in order to clearly indicate whose ball, among the balls having fallen on the periphery of the green on the screen, has fallen on which spot on the periphery of the real green.

All devices according to the present invention, for example, the laser pointer 3, the DB server 10, the screen control PC 20, the RPGA server 30, the laser control PC 40 and the wireless terminal 50, may be connected with one another either with wires or wirelessly via LAN, and, of course, these devices may be connected to a web server 13 to share information on the Internet.

From here on, a method of playing a golf game using a system for indicating the impact point of a golf ball on a screen on a real green according to the present invention is described.

The golf playing method according to the invention relates to a method of playing a golf game in an indoor golf café having a screen golf area for tracing a golf ball on a screen from a tee shot zone to the periphery of a green for the progress of the golf game and a short game area for allowing players to play a short game on a real green once the ball reaches the periphery of the green.

First, the screen golf area involves a step of playing a golf game by hitting golf balls towards a screen until the ball reaches the periphery of a green. Once the golf ball falls on the periphery of the green on the screen, players end the screen golf playing step above and move to a real green covered with real grass to play a short game. To this end, the next step requires converting the impact point of the ball on the screen into the coordinates of the ball on the real green and storing the coordinates in the DB server 10. The next step is to calculate the movement data for a laser pointer installed above the real green, based on the converted coordinates stored in the DB server 10, and to store the data in the RPGA server 30.

Next, laser is irradiated on the real green to indicate the impact point of the ball, based on the movement data for the laser pointer stored in the RPGA server 30. Then, the players play a short game after placing a golf ball on the impact point of their ball indicated on the real green.

The steps of storing the coordinates in the DB server 10, storing the movement data in the RPGA server 30 and indicating the impact point of the ball may be performed by a wireless terminal 50 held by a caddy.

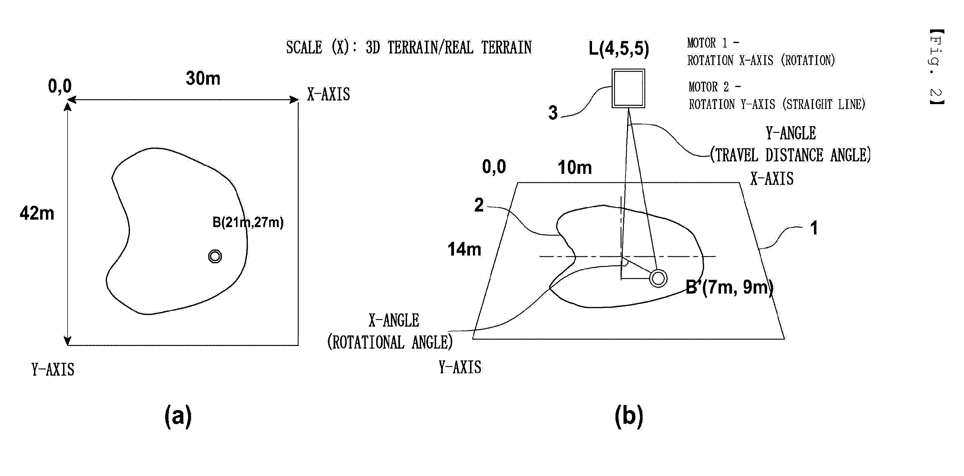

Next, an embodiment of converting the position of a golf ball on the screen (in 3D graphics) into the position of the ball on a real green is described in detail. FIG. 2 illustrates conceptual diagrams for explaining the conversion from the coordinates of a ball in a 3D terrain to the position of the ball on a real green. FIG. 2(a) shows the 3D terrain and FIG. 2(b) shows the periphery of the real green (1) and the real green (2).

The periphery of the real green (1) in FIG. 2(b) is scaled down by 3:1 from the 3D terrain in FIG. 2(a). Although the periphery of the real green (1) is reduced in the present embodiment, it may be, in practice, larger than the 3D terrain, to which case, of course, the invention can be applied.

In an example of FIG. 2, the periphery of the green in the 3D terrain is 30m wide and 42m long. The coordinates of the ball, without consideration of its height, are 21m in width and 27m in length, when the origin (0,0) is the top-left corner.

The laser pointer 3, installed above the center of the real green in FIG. 2(b), needs to irradiate laser on the position of the ball on the real green ("converted position"), which is obtained by converting the position of the ball on the screen. The laser pointer 3 always points to the center of the real green, when not in operation. For convenience, the center is referred to as "origin position."

The directional movement of the irradiation of the laser pointer 3 from the origin position to the converted position is conducted by using the distances and angles calculated by a computer, and the operation of a real motor is performed by a stepping motor connected to the laser pointer driving device 41.

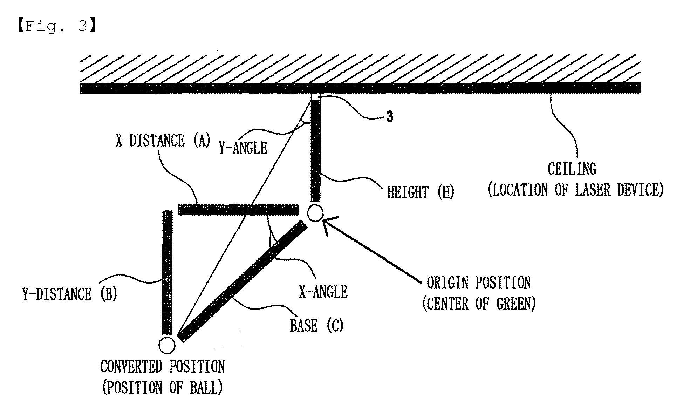

FIG. 3 is a diagram for explaining the movement of the laser pointer 3 towards a converted position. The height H of the laser pointer 3 hanging from the ceiling from the plane of the real green is fixed. The decomposition of the distance from the origin position (center of the green) to the converted position (position of the ball) into x-axis and y-axis coordinates shows that the distance along the x-axis, or X-distance, is A, the distance along the y-axis, or Y-distance, is B, and the distance of the base is C. Therefore, the laser pointer 3 needs to adjust the angle thereof on the plane of the green by X-angle. Once X-angle is calculated, the RPGA server 30 transmits a signal through the laser pointer driving device 41 to a first stepping motor in order to instruct the laser pointer 3 to rotate by X-angle on the plane.

Next, the straight distance D between the laser pointer 3 and the converted position (position of the ball) and the angle (Y-angle) between the straight distance D and the height H are calculated by using the base C and the height H. Once Y-angle is calculated, the RPGA server 30 having received the value of Y-angle commands the laser control PC 40 to transmit a signal through the laser pointer driving device 41 to a second stepping motor to instruct the laser pointer 3 to rotate upward by Y-angle from the origin position. Once the position of the ball on the real green is determined, laser is irradiated on the position to indicate a laser image on the green or the periphery thereof.

When a short game on the green is terminated, the laser pointer 3 receives a signal from the laser control PC 40 and returns to the origin position.

### Industrial Applicability

The present invention can be applied to various games, including a golf game.

## Claims

1. A system for indicating an impact point of a golf ball on a screen on a real green, the system used in an indoor golf café having a screen golf area for tracing a golf ball from a tee shot zone to a periphery of a green to play a game; and a short game area for playing a short game on a real green once a golf ball reaches a periphery of a green, comprising:
a DB server for receiving, as an input, and storing information about a golf course displayed on a screen for the screen golf area and the same information as a real green, converting an impact point of a ball having fallen on a periphery of a green during a game into coordinate data and storing the data;
an RPGA server for retrieving and storing coordinates of a ball stored in the DB server and calculating and storing movement information for a laser pointer, such as travel distance, direction and rotational angle, based on the stored coordinates of the ball;
a laser control PC for retrieving and storing movement information for a laser pointer stored in the RPGA server and operating a laser pointer; and
a laser pointer for irradiating a laser beam to indicate an impact point of a ball having fallen on a periphery of a green according to a command of the laser control PC.

2. The system of claim 1, further comprising a wireless terminal for commanding transmission of coordinates of a ball stored in the DB server to the RPGA server and commanding a laser control PC to operate a laser pointer.

3. The system of claim 1, wherein the coordinates of the ball may be distances on the x-axis, y-axis and a diagonal between the x-axis and the y-axis from a center of a green as a starting point.

4. The system of claim 1, wherein the laser pointer is installed above a real green and is operated by a motor connected with the laser pointer.

5. The system of claim 1, wherein a laser beam irradiated on an impact point of a ball from the laser pointer contains a point image and a player's ID.

6. A method of playing a golf game using the system for indicating an impact point of a golf ball on a screen on a real green, the method used for playing a golf game in an indoor golf café having a screen golf area for tracing a golf ball on a screen from a tee shot zone to a periphery of a green to play a game; and a short game area for allowing players to play a short game on a real green once a golf ball reaches a periphery of a green, comprising the steps of:
playing a screen golf game by hitting a golf ball on the screen golf area until a ball reaches a periphery of a green;
ending the previous screen golf step when the golf ball falls on a periphery of a green on a screen, converting an impact point of a ball on the screen into coordinates of an impact point of a ball on a real green and storing the coordinates in a DB server;
calculating movement data for a laser pointer disposed above a real green, based on the converted coordinates stored in the DB server, and storing the data in an RPGA server;
irradiating a laser beam on an impact point of a ball on a real green, based on movement data for a laser pointer stored in the RPGA server; and
playing a short game after placing a golf ball on a spot marked on the real green.

7. The method of claim 6, wherein steps of storing coordinates in the DB server, storing movement data in the RPGA server and irradiating a laser beam on an impact point of a ball may be performed by a wireless terminal held by a caddy.
